# EUROPÄISCHE PATENTANMELDUNG

(11) **EP 1 382 871 A1**
(43) Veröffentlichungstag der Anmeldung: **21.01.2004**
(21) Anmeldenummer: 02015797.0
(22) Anmeldetag: 15.07.2002
(51) Int. Cl.: F16D 3/76, F16F 1/371

(54) **Einrichtung zum elastischen Koppeln wenigsten zweier starrer, schwingender Bauteile, elastisches Gelenk und Verfahren zum Herstellen eines elastischen Gelenks**

(71) Anmelder: WOCO AVS GmbH, 63628 Bad Soden-Salmünster (DE)
(72) Erfinder: Portal Eric, 63628 Bad Soden-Salmünster (DE)
(74) Vertreter: Weber-Bruls, Dorothée, Dr.

(57) **Zusammenfassung**

Bei einer Einrichtung zum elastischen Koppeln wenigstens zweier schwingende Bauteile (3,5), wie Gelenkarmaturen oder Bestandteile eines Schwingungssystems insbesondere eines Kraftfahrzeugs, mit einem Grundkörper (7) aus einem elastischen und im wesentlichen inkompressiblen Material, der die Bauteile miteinander verbinden soll, ist vorgesehen, daß ein mit dem Grundkörper funktional verbundenes Spannelement (9) einen entspannten Zustand, in dem wenigstens eines der Bauteile, vorzugsweise beide Bauteile, von dem Grundkörper (7) befreit ist (sind), und einen gespannten Zustand aufweist, in dem das Spannelement (9) derart auf dem Grundkörper (7) einwirkt, daß der Grundkörper im wesentlichen in Richtung des wenigstens einen Bauteils (3,5), vorzugsweise der beiden Bauteile, elastisch verformt oder gespannt wird und unter Bildung wenigstens eines Anpreßbereichs, vorzugsweise wenigstens zwei Anpreßbereiche, mit dem Bauteil, vorzugsweise beiden Bauteilen, koppeln in Eingriff steht.

## Beschreibung

Die Erfindung betrifft eine Einrichtung zum elastischen Koppeln wenigsten zweier starrer, schwingender Bauteile, ein elastisches Gelenk, eine Anordnung zum elastischen Koppeln wenigsten zweier starrer Bestandteile eines schwingenden Systems insbesondere eines Kraftfahrzeugs und ein Verfahren zum Herstellen eines elastischen Gelenks.

Um schwingende Bauteile von einander zu isolieren, zu lagern oder miteinander zu koppeln, werden elastische Kopplungsvorrichtungen, wie elastische Gelenke, Dämpfer, etc., eingesetzt, die eine die jeweiligen schwingenden Bauteile verbindenden elastischen und im wesentlichen inkompressiblen, also kaum zusammendrückbaren, Grundkörper gemeinsam haben. Für den Grundkörper wird meist Gummi verwendet. Der Grundkörper sollte fest mit dem schwingenden Bauteil verbunden werden, damit eine Relativbewegung an der Verbindungsfläche zwischen dem Bauteil und dem Grundkörper vermieden wird.

Vor allem bei Schwingungssystemen in Kraftfahrzeugen, insbesondere bei Stabilisationslagern und Fahrwerklagern, werden üblicherweise die schwingenden Fahrzeugbauteile durch elastische Gelenke miteinander schwingungsisolierend gekoppelt. Das Gelenk hat eine Innen- und eine Außenarmatur, an denen der jeweilige Bestandteil des Schwingungssystems befestigt wird. Zwischen der Außen- und Innenarmatur ist der elastische und im wesentlich inkompressible Grundkörper angeordnete. Um den Grundkörper an die Armaturen fest zu koppeln, werden Vulkanisationsverfahren eingesetzt, die fertigungstechnisch sehr aufwendig sind und zusätzlich das elastische Material des Grundkörpers thermisch belasten. Warm- oder Kaltklebeverfahren sind insofern aufwendig, als zur Erzeugung eines ausreichenden Klebeverbunds der Klebstoff zwischen dem Grundkörper und dem zu koppelnden Bauteil unter Druck zu setzen ist. Schließlich ist bekannt, den Grundkörper zwischen den Bauteilen einzuspannen, indem entweder die Außenarmatur zusammengedrückt oder die Innenarmatur geweitet werden.

Alle diese Befestigungsverfahren haben gemeinsam, daß sie in ihre Realisierung sehr aufwendig sind, was bei dem vielfältigen Einsatz von elastischen Einrichtungen zu hohen Fertigungskosten führt.

Es ist Aufgabe der Erfindung, eine Einrichtung zum elastischen Koppeln wenigsten zweier starrer, schwingender Bauteile gemäß dem Oberbegriff von Anspruch 1 zu schaffen, bei der eine sichere Befestigung des elastischen Grundkörpers an die zu koppelnden Bauteile gewährleistet wird, wobei die Maßnahme zum Befestigen möglichst einfach und in ihrer Realisierbarkeit wirtschaftlich sein soll.

Diese Aufgabe wird durch Anspruch 1 gelöst. Erfindungsgemäß ist die Einrichtung zum Koppeln wenigsten zweier starrer, schwingender Bauteile mit einem Spannelement erweitert, das funktional mit dem Grundkörper zusammenwirkt. Ist das Spannelement entspannt, kann die Einrichtung zur Montage an die festgelegte Montagestelle gebracht und gegenüber den Bauteilen ausgerichtet werden. In dem entspannten Zustand des Spannelements ist der Grundkörper noch in einem Abstand zum zu koppelnden Bauteil angeordnet oder liegt lediglich an diesem im wesentlichen spannungsfrei an. Durch das Spannen des Spannelements verformt sich der Grundkörper und wird zum Bauteil hin gedehnt. Diese Dehnungsrichtung wird durch die Ausgestaltung des Spannelements mit Bezug auf den Grundkörper festgelegte. Die gerichtete Dehnung drückt den Grundkörper auf das zu koppelnden Bauteil, wobei die Reibung an wenigstens einem Anpressbereich zwischen den Grundkörper und dem Bauteil eine ausreichend feste Koppelung der Einrichtung an das Bauteil gewährleistet. Vorteilhafterweise sind mehrere von einander getrennte Anpressbereiche vorgesehen. Bei dem erfindungsgemäßen Einrichtung sind also keine chemischen Verbindungsmaßnahmen notwendig. Zudem müssen auch die zu koppelnden Bauteile nicht mechanisch beansprucht werden. Vielmehr besitzt die erfindungsgemäßen Einrichtung aufgrund des Spannelements eine große Flexibilität bei ihrer Montage an das zu koppelnde Bauteil. Außerdem können bei der erfindungsgemäßen Einrichtung Kalt- und Warmklebeverfahren viel einfacher unterstützend herangezogen werden, weil das Spannelement den erforderlichen Druck an den Verbindungsflächen zwischen dem Grundkörper und dem zu koppelnden Bauteil erzeugt.

Vorzugsweise kann das gespannte Spannelement wieder entspannt werden, um die erfindungsgemäße Einrichtung zu demontieren oder neu gegenüber den Bauteilen auszurichten. Vorteilhafterweise kann die im Grundkörper erzeugte Spannung durch entsprechende Gestaltung und entsprechendes Spannen des Spannelements je nach den zu erwartenden Belastungsverhältnissen der Einrichtung eingestellt werden.

In einer bevorzugten Ausführung der Erfindung, ist das Spannelement dazu ausgelegt, eine Dehnung des Grundkörpers hin zu beiden im wesentlichen gegenüberliegenden Bauteilen zu bewirken, so daß jeweils an beiden Bauteilen wenigstens ein Anpressbereich, vorzugsweise zwei, drei oder mehrere Anpressbereiche, gebildet wird. Eine elastische Koppelung des Grundkörpers nur an ein Bauteil ist dann möglich, wenn das Spannelement das Bauteil oder das Bauteil das Spannelement umgreift und der Umgriff eine Gegenkraft zur Dehnungskraft hin zum Bauteil erzeugt, also wenn beispielsweise das Spannelement ein rohrförmiges Bauteil zumindest teilweise umgibt.

In einer bevorzugten Ausführung der Erfindung bildet das Spannelement wenigstens eine Kammer, die eine zum zu koppelnden Bauteil weisende Öffnung aufweist. Die Kammer ist vorzugsweise vollständig mit dem Material des Grundkörper belegt. Beim Übergang vom entspannten in den gespannten Zustand des Spannelements verkleinert sich das von der Kammer begrenzte Volumen. Das inkompressible Material des Grundkörpers in der Kammer weicht der Volumenreduzierung durch die Öffnung der Kammer aus und baut je nach Stärke der Volumenreduzierung einen auf das Bauteil wirkenden Druck auf.

Vorzugsweise soll gewährleistet sein, daß das Spannelement weder im montierten noch im unmontierten Zustand eines der Bauteile berührt.

In einer bevorzugten Ausführung ist das Spannelement als plastisch verformbares Flachteil, insbesondere Blechteil, ausgeführt. Das Flachteil ist vom Grundköper größtenteils bedeckt und kann größtenteils in dem Grundkörper eingebettet sein, um eine Dehnung des Grundkörpers in alle Richtungen zu bewirken. Weiterhin kann das Flachteil mit einem zu den jeweiligen zu koppelnden Bauteilen hin weisenden Profil versehen sein, das insbesondere die wenigstens eine zum Bauteil offene Kammer bildet. Das Profil kann beliebig ausgeführt sein und bestimmt, an welcher Stelle der Grundkörper mit dem Bauteil in koppelndem Eingriff gelangt.

Bei einem rohrförmigen Flachteil kann das Profil durch umlaufende Erhebungen bzw. Senkungen realisiert sein, die in Längsrichtung des Flachteils verteilt sind. Es sind diese Erhebungen bzw. Senkungen, welche die Kammer bilden. Das Profil kann kupiert, spitz zulaufend, zackenartig, zähneartig oder auf ähnliche Weise ausgeführt sein.

Das Flachteil kann jeder beliebige Form annehmen, die sich vor allem nach der schwingungsentkoppenden Aufgabe der Einrichtung richtet. In einer bevorzugten Ausführung weist das Flachteil ein geschlossenes Profil auf. Insbesondere ist das Profilbauteil zylindrisch oder rohrförmig ausgeführt, wobei es sowohl innen als auch außen von dem Grundkörper umgeben ist. Zur Bildung einer Profilierung, mit der die erforderliche Anpreßkraft an das Bauteil erzeugt werden kann, ist das Flachteil vorzugsweise spiralförmig oder weist eine Schraubenform auf. Die Gewindehebungen oder Spiralläufe dienen als Begrenzungswände für die Kammern. Durch eine axiale Verformung des Flachteils werden die Gewindehebungen aufeinander zu gedrückt, so daß sich das Volumen der Kammern reduziert wird. Wie oben erläutert, weicht das zwischen den Gewindegängen liegende Material des Grundkörpers aus und drückt entsprechend auf die Bauteile. Über die Anzahl der Gewindegänge, also Kammern, kann die Dichte der Anpressbereiche an den zu koppelnden Bauteilen variiert werden.

Die Größe der Anpressbereiche bestimmt unter anderem auch das Schwingungsentkopplungsverhalten einer Anordnung der beiden durch die erfindungsgemäße Einrichtung gekoppelten Bauteile. Schmale Anpressbereiche, insbesondere punktuelle oder lineare Anpressbereiche, lassen auch kleine Schwenkbewegungen oder ein Rotationsspiel der gelenkigen Anordnung um diese Anpressbereiche zu. Großflächige Anpressbereiche versteifen hingegen die gelenkige Anordnung. Die Größe des Anpressbereichs wird vorteilhafterweise über die Abmessung der Öffnung der Kammer eingestellt.

In einer weiteren Ausführung der Erfindung ist das Profil des Flachteils offen ausgeführt. Das heißt, im Fall eines zylinderförmigen Flachteils besitzt dieser einen Schlitz, der sich längs des zylindrischen Flachteils erstreckt.

Im Falle, daß die erfindungsgemäße Einrichtung an nur eine Armatur gekoppelt werden soll, kann die erfindungsgemäße Einrichtung ein Abschlußteil aufweisen, das auf der vom Bauteil abgewandten Seite angeordnet ist. Damit das Abschlußteil an dem Grundkörper der erfindungsgemäßen Einrichtung festsitzt, ist vorzugsweise das Flachteil mit einer Profilierung vorgesehen, die auch eine Dehnung in Richtung des Abschlußteils bewirkt. Sollte die erfindungsgemäße Einrichtung mit einem Außenrohr gekoppelt werden, so dient das Abschlußteil als Innenhülle, die auf gleiche Weise wie das Abschlußteil beim als Innenrohr ausgeführten Bauteil an dem Grundkörper befestigt ist. Das Abschlußteil ist strarr ausgebildet, um daran ein anderes Bestandteil eines Schwingungssystems zu befestigen.

Weiterhin betrifft die Erfindung ein elastische Gelenk mit einer ersten Armatur, die an eine zweite Armatur schwingungsisolierend gekoppelt ist. Zwischen den beiden Armaturen ist die erfindungsgemäße elastische Einrichtung anzuordnen, wobei die Befestigung der jeweiligen Armatur an den Grundkörper durch das Spannelement realisiert ist. Das Spannelement veranlasst, daß das Material des Grundkörpers sowohl in Richtung der ersten als auch in Richtung der zweiten Armatur gedehnt wird, so daß der Grundkörper in einen reibschlüssigen Eingriff mit der jeweiligen Armatur unter Bildung wenigstens eines Anpreßbereichs gelangt. Das erfindungsgemäße Gelenk kann einfach hergestellt und mit geringem Montageaufwand in Schwingungssysteme integriert werden.

In der bevorzugten Ausführung des erfindungsgemäßen Gelenks ist die erste Armatur als Innenrohr und die zweite Armatur als Außenrohr ausgeführt. Außen- und Innenrohr sind zueinander konzentrisch angeordnet.

In einer weiteren Ausführung des erfindungsgemäßen Gelenks ist die erste Armatur als Innenrohr ausgeführt, während die zweite Armatur als ein im Querschnitt rechteckiges, hohles, langgestrecktes Rohr gebildet ist. Die Symmetrieachsen beider Armaturen können aufeinander oder versetzt zueinander liegen. Es sei grundsätzlich erwähnt, daß die Armaturen jegliche Form annehmen können. Auch das Flachteil der erfindungsgemäßen Einrichtung zum elastischen Koppeln der beiden Armaturen kann an die Form der Armaturen angepaßt oder gänzlich unterschiedlich zu den beiden Armaturen sein. Es ist lediglich darauf zu achten, daß bei der Verformung des Flachteils die Anpresskraft des um das Flachteil liegenden Grundkörpers an die Außen- bzw. Innenfläche der jeweiligen Armatur stark genug ist, um den für die Belastungsverhältnisse erforderlichen Reibschluß zwischen der erfindungsgemäßen Einrichtung und der jeweiligen Armatur zu gewährleisten.

Außerdem betrifft die Erfindung eine Anordnung zum elastischen Koppeln wenigsten zweier starrer Bestandteile eines Schwingungssystems insbesondere eines Kraftfahrzeugs. Mit der erfndungsgemäßen Einrichtung können derartige Anordnungen sehr leicht realisert werden.

Zudem ist mit der erfindungsgemäße Anordnung eine erhöhte konstruktive Flexibilität gegeben, um Schwingungsentkopplungssysteme zu realisieren.

Schließlich betrifft die Erfindung ein Verfahren zum Herstellen eines elastischen Gelenks. Beim erfindungsgemäßen Verfahren wird weder die Außen- noch oder Innenarmaturen verformt. Vielmehr gewährleistet das erfindungsgemäße Verfahren eine reibschüssige Verbindung des elastischen Grundkörpers mit den Armaturen, indem ein mit dem am Grundkörper funktional zusammenwirkendes Spannelement eine Dehnung und damit ein Pressen des Grundkörpers an die Armaturen bewirkt.

Vor allem bei einem als Flachteil ausgebildeten Spannelement, das beispielsweise im wesentlichen konzentrisch zu den rohrförmigen Armaturen ausgerichtet ist, wird das Spannelement in den gespannten Zustand gebracht, indem es in einer Richtung (Verformungsrichtung) verformt, insbesondere zusammengedrückt, wird, die im wesentlichen parallel zur axialen Längserstreckung des Spannelements ist. Die Verformungsrichtung ist vorzugsweise senkrecht zur Richtung der durch die Verformung hervorgerufene Dehnung des Grundkörpers.

Weitere Vorteile, Eigenschaften und Merkmale der Erfindung sind der folgenden Beschreibung, den beiliegenden Zeichnungen zu entnehmen, in denen zeigen:
- Fig. 1a: eine Längsschnittansicht der erfindungsgemäßen Einrichtung im unmontierten Zustand;
- Fig. 1b: eine Längsschnittansicht der erfindungsgemäßen Einrichtung gemäß Fig. 1a im montierten Zustand;
- Fig. 2a: eine Längsschnittansicht einer weiteren Ausführung der erfindungsgemäßen Einrichtung im unmontierten Zustand;
- Fig. 2b: eine Längsschnittansicht der erfindungsgemäßen Einrichtung gemäß Fig. 2a im montierten Zustand;
- Fig. 3: eine Längsschnittansicht einer erfindungsgemäßen Anordnung in einer ersten Ausführung,
- Fig. 4: eine Querschnittansicht der Anordnung gemäß Fig. 3 entlang der Schnittlinie IV-IV.
- Fig. 5: eine Längsschnittansicht einer erfindungsgemäßen Anordnung in einer zweiten Ausführung;
- Fig. 6: eine Querschnittansicht der erfindungsgemäßen Anordnung gemäß Fig. 5 entlang der Schnittlinie VI-VI;
- Fig. 7: eine Längschnittansicht einer erfindungsgemäßen Anordnung in einer dritten Ausführung;
- Fig. 8: eine Querschnittansicht der erfindungsgemäßen Anordnung gemäß Fig. 7 entlang der Schnittlinie VIII-VIII;
- Fig. 9: eine Längsschnittansicht einer erfindungsgemäßen Anordnung in einer vierten Ausführung;
- Fig. 10: eine Querschnittansicht der erfindungsgemäßen Anordnung gemäß Fig. 9 entlang der Schnittlinie X-X;
- Fig. 11: eine Längsschnittansicht einer erfindungsgemäßen Anordnung in einer fünften Ausführung;
- Fig. 12: eine Querschnittansicht der erfindungsgemäßen Anordnung gemäß Fig. 11 entlang der Schnittlinie XII-XII;

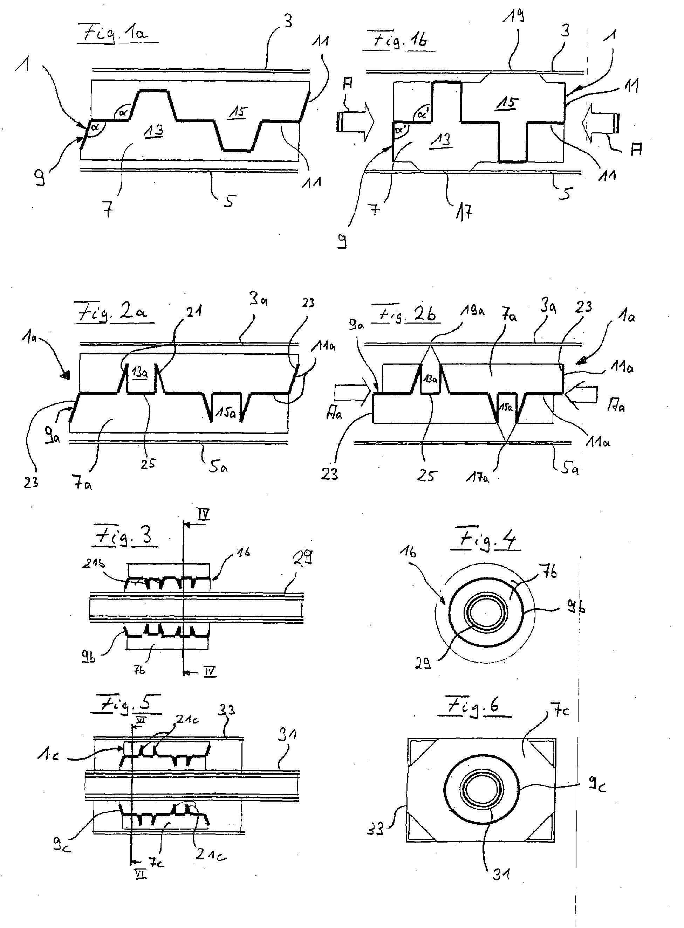

In Fig. 1a ist das Grundprinzip der erfindungsgemäßen Einrichtung 1 zum Koppeln schwingender Bauteile 3, 5 eines nicht dargestellten Schwingungssystems gezeigt. Die schwingenden Bauteile 3, 5 sind in dieser Ausführung starre Platten, die in einem vorgegebenen Abstand zueinander angeordnet sind. Die Bauteile 3, 5 werden durch die Einrichtung 1 schwingungsisolierend gekoppelt.

Die Einrichtung 1 umfaßt einen Grundkörper 7 aus einem elastischen und im wesentlichen inkompressiblen Material, wie Gummi, der so geformt ist, daß er zwischen die Bauteile 3, 5 leicht eingebracht werden kann. Hierfür ist die Stärke des Grundkörpers 7 kleiner als der zwischen den Bauteilen 3, 5 bestehende Abstand. Der Grundkörper 7 wird von einem Spannelement 9 in zwei im wesentlichen identische Teile unterteilt. Diese Teile sind derart an dem Spannelement 9 angebracht, daß sie von diesem getragen werden.

Das Spannelement 9 ist mit einem gleichmäßigen, kupierten Profil mit einer Erhebung und einer Senkung versehen. Das Spannelement 9 ist durch ein Blechteil gebildet, das gleich lange, aneinander einstückig anschließende Blechsegmente 11 umfaßt, die in einem stets gleich großen stumpfen Winkel α zueinander liegen.

Das profilierte Spannelement bildet voneinander getrennte Kammern 13, 15, wobei die Kammer 13 zum Bauteil 5 und die Kammer 15 zum Bauteil 3 hin offen sind.

In Fig. 1b ist der Kopplungsvorgang des Grundkörpers 7 an die Bauteile 3 und 5 dargestellt. Um die Einrichtung 1 an die Bauteile 3, 5 zu koppeln, wird eine durch die Pfeile A angedeutete Druckkraft auf das Spannelement 9 ausgeübt, um es irreversibel zusammenzudrücken. Die Druckkraft greift im wesentlichen an der nicht näher dargestellten elastischen Nullachse der Einrichtung 1 an. Durch die Verformung des Spannelements 9 werden die einzelnen Segmente 11 derart verformt, daß sie im gespannten Zustand des Spannelements 9 in einem 90-Grad Winkel α' zueinanderliegen. Dadurch reduziert sich das von den Segmenten 11 begrenzte Volumen der Kammer 13, 15. Da das den Grundkörper 7 bildende Material im wesentlichen inkompressibel ist, weicht das sich in den Kammern 13, 15 befindliche Material aufgrund der Volumenreduzierung durch die Öffnung der Kammer 13, 15 hin zu den Bauteilen 3, 5 aus. Diese Ausdehnung des Materials bewirkt, daß der Grundkörper 7 koppelnd, hier in jeweils einem Anpreßbereich 17 bzw. 19, mit dem jeweiligen Bauteil 3, 5 in Eingriff kommt. Die Größe des Anpreßbereich 17, 19 sowie die Stärke, mit welcher der Grundkörper 7 an das Bauteil 3, 5 drückt, wird durch die Abmessung der Kammer 13, 15 sowie durch die Stärke der Verformung A des Spannelements 9 eingestellt.

In Fig. 2a ist das Grundprinzip der erfindungsgemäßen Einrichtung in einer weiteren Ausführung dargestellt. Zur besseren Lesbarkeit der Figurenbeschreibung sind die identischen und ähnlichen Konstruktionselemente mit den gleichen Bezugsziffern wie in den Fig. 1a und 1b versehen, wobei ein "a" hinzugefügt ist.

Die Ausführung gemäß Fig. 2a und 2b unterscheiden sich von der Ausführung nach den Fig. 1a und 1b darin, daß das Profil des Spannelements 9a zu den Bauteilen 3a, 5a ragende Spitzen 21 aufweist. Die die Spitzen 21 bildenden Schenkel begrenzen Kammern 13a und 15a, die zu den Bauteilen 3a und 5a hin offen. Die Kammern 13a und 15a sind kleiner als die Kammer 13, 15 gemäß der in Fig. 1a und 1b gezeigten Ausführung. Im montierten Zustand der Einrichtung 1a hat sich das Spannelement 9a dadurch verformt, daß sich die Außenschenkel 23 in einen rechten Winkel zum anliegenden Schenkel verformt haben. Allerdings wird im Gegensatz zu der Ausführung gemäß den Fig. 1a und 1b die Verringerung des Volumens der Kammer 13a und 15a nicht durch Änderung des zwischen den die Kammer begrenzenden Segmenten liegenden Winkels sondern durch Kürzung des zwischen den beiden Spitzen 21 liegenden Schenkels 25 bewirkt .

Die relativ kleine Öffnung der Kammer 13a, 15a stellen ein linearen oder schmalflächigen Anpreßbereich 17a, 19a bereit, wodurch ein Freiheitsgrad der gekoppelten Anordnung aus den Bauteilen 3a, 5a und der Einrichtung 1a bezüglich Drehungen um zur elastischen Nullachse senkrechte Richtungen leichter zugelassen werden als bei den breitflächigen Anpreßbereichen 17, 19 gemäß der Ausführung in Fig. 1a, 1b.

In den Fig. 3 und 4 ist eine weitere Ausführung der erfindungsgemäßen Einrichtung dargestellt, die an ein einziges Bauteil 29 elastisch gekoppelt ist. Identische und ähnliche Konstruktionselemente sind mit den gleichen Bezugszeichen wie in den Fig. 2a und 2b versehen, wobei statt dem "a" ein "b" hinzugefügt ist. Die bereits erwähnten Konstruktionselemente bedürfen daher keiner weiteren Erläuterung.

Die in den Fig. 3 und 4 dargestellte Ausführung der Einrichtung ist im wesentlichen rohrförmig ausgebildet und liegt konzentrisch zu einem als Rohr ausgebildeten Bauteil 29. Die Einrichtung 1b umfaßt ein zum Spannelement 9a gemäß Fig. 2a und 2b ähnliche Spannelement 9b, das allerdings rohrförmig ist und ausschließlich zur konzentrischen Achse weisende Spitzen 21b aufweist. Das Spannelement 9b ist im Grundkörper 7b eingebettet, so daß ein Teil des Grundkörpers 7 auch das Spannelement 9b umgibt. An diesem Teil des Grundkörpers 7 kann ein nicht dargestelltes weiteres Bauteil beispielsweise durch Kleben angekoppelt werden.

Wie oben bereits angedeutet, wird die Befestigung der Einrichtung 1b an dem Bauteil 5b durch Verformung des profilierten Spannelements 9b bewirkt, bei der sich die Volumen der hin zum Bauteil 29 offenen Kammer ändert.

In den Fig. 5 und 6 ist ein erfindungsgemäßes Gelenk dargestellt, das eine Innenarmatur 31 und eine Außenarmatur 33 aufweist. Die Innenarmatur 31 ist ein Rohr. Die Außenarmatur ist als ein im Querschnitt rechteckiges hohles Bauteil ausgeführt, das sich parallel zur Innenarmatur erstreckt. Die Außenarmatur 33 und die Innenarmatur 31 sind durch eine erfindungsgemäße Einrichtung 1c verbunden. Für die bessere Lesbarkeit der Figurenbeschreibung sind die gleichen und identischen Konstruktionselemente der Einrichtung 1c mit den gleichen Bezugsziffern wie in den entsprechenden oben dargestellten Ausführungen versehen, wobei ein "c" angefügt ist.

Diese erfindungsgemäße Einrichtung 1c weist ein Profil mit Spitzen 21c auf, die sowohl zur Außenarmatur 33 als auch zur Innenarmatur 31 weisen. Durch Verformung des Spannelements 9c wird der Grundkörper 7c der Einrichtung 1c sowohl zur Außenarmatur 33 als auch zur Innenarmatur 31 hin gedehnt, so daß eine reibschlüssige Kopplung des Grundkörpers 7c an beiden Armaturen gewährleistet ist.

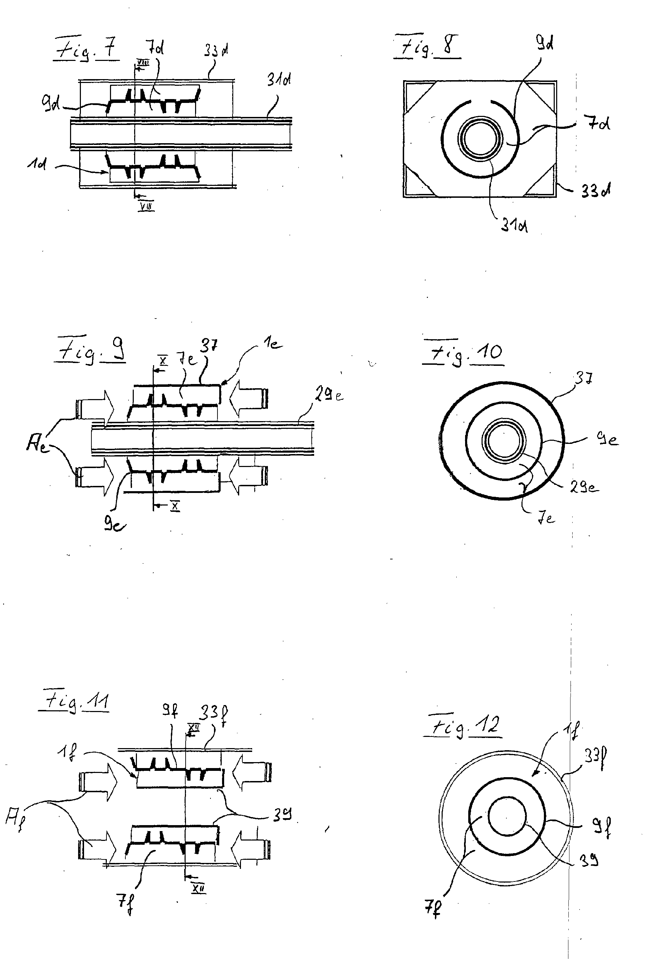

Die in den Fig. 7 und 8 dargestellte Ausführung unterscheidet sich von der Ausführung gemäß den Fig. 5 und 6 darin, daß das Spannelement 9d in seiner Längsrichtung geschlitzt ist. Die Ausführung gemäß den Fig. 7 und 8 ist mit den gleichen Bezugsziffern wie in der obigen Ausführung versehen, wobei ein zusätzliches "d" hinzugefügt ist. Das geschlitzte Spannelement 9d gewährleistet eine ausgewogene Verteilung der Dehnungskraft auf das Bauteil 33d, obwohl sich dessen Geometrie erheblich von der Geometrie des Spannelements 9b unterscheidet.

In den Fig. 9 und 10 ist eine weitere Ausführung der erfindungsgemäßen Einrichtung dargestellt, wobei identische und gleiche Konstruktionselemente mit den gleichen Bezugszeichen wie bei den oberen Ausführungen versehen sind, wobei ein "e" hinzugefügt ist. Die Einrichtung 1e ist an ein als Rohr ausgeführtes Bauteil 29e elastisch gekoppelt. Den Grundkörper 7e umgibt ein starres äußeres Abschlußteil 37, an dem ein nicht dargestellter Bestandteil eines Schwingungssystems befestigt werden kann. Auch das Abschlußteil 37 ist erfindungsgemäß durch die Verformung des Spannelements 9e mit dem Grundkörper 7e fest gekoppelt.

Die in den Fig. 11 und 12 dargestellte Ausführung ist mit den gleichen Bezugszeichen wie in der Ausführung gemäß den Fig. 9 und 10 dargestellt, wobei statt dem "e" ein "f' hinzugefügt ist. Die Ausführung gemäß den Fig. 11 und 12 unterscheidet sich von der Ausführung gemäß den Fig. 9 und 10 darin, daß das starre Abschlußteil 39 zum Befestigen an ein Bestandteil eines schwingenden Systems innenliegend angeordnet ist und die Außenarmatur 33f rohrförmig ausgebildet ist. Die Außenarmatur 33f und das innere Abschlußteil 39 ist über die erfindungsgemäße Einrichtung 1e, wie oben beschrieben ist, miteinander elastisch gekoppelt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1a-f: Einrichtung
- 3a,b: Bauteil
- 5a,b: Bauteil
- 7a-f: Grundkörper
- 9a-f: Spannelement
- 11, 11a: Segment
- 13, 13a: Kammer
- 15, 15a: Kammer
- 17, 17a: Anpreßbereich
- 19, 19a: Anpreßbereich
- 21, 21b,c: Spitzen
- 23: Außensegment
- 25: Segment
- 29, 29e: Innenrohr
- 31,31d: Innenarmatur
- 33, 33d, 33f: Außenarmatur
- 37: Abschlußteil
- 39: äußeres Abschlußteil
- α: Winkel
- A: Verformrichtung

## Patentansprüche

1. Einrichtung zum elastischen Koppeln wenigsten zweier schwingender Bauteile (3, 3a, 5, 5a, 29, 29e, 31, 31d, 33, 33d, 33f, 37, 39), wie Gelenkarmaturen oder Bestandteile eines Schwingungssystems insbesondere eines Kraftfahrzeugs, mit einem Grundkörper (7, 7a, 7b, 7c, 7d, 7e) aus einem elastischen und im wesentlichen inkompressiblen Material, der die Bauteile (3, 3a, 5, 5a, 29, 29e, 31, 31d, 33, 33d, 33f, 37, 39) miteinander verbinden soll,
**dadurch gekennzeichnet, daß**
ein mit dem Grundkörper (7, 7a, 7b, 7c, 7d, 7e) funktional verbundenes Spannelement (9, 9a, 9b, 9c, 9d, 9e, 9f) einen entspannten Zustand, in dem wenigstens eines der Bauteile (3, 3a, 5, 5a, 29, 29e, 31, 31d, 33, 33d, 33f, 37, 39), vorzugsweise beide Bauteile, von dem Grundkörper (7, 7a, 7b, 7c, 7d, 7e) befreit ist (sind), und einen gespannten Zustand aufweist, in dem das Spannelement (9, 9a, 9b, 9c, 9d, 9e, 9f) derart auf den Grundkörper (7, 7a, 7b, 7c, 7d, 7e) einwirkt, dass der Grundkörper (7, 7a, 7b, 7c, 7d, 7e) im wesentlichen in Richtung des wenigstens einen Bauteils (29), vorzugsweise der beiden Bauteile (3, 3a, 5, 5a, 29, 29e, 31, 31d, 33, 33d, 33f, 37, 39), elastisch verformt oder gespannt wird und unter Bildung wenigstens eines Anpreßbereichs (17, 17a, 19, 19a), vorzugsweise wenigstens zweier Anpreßbereiche, mit dem Bauteil (3, 3a, 5, 5a, 29, 29e, 31, 31d, 33, 33d, 33f, 37, 39), vorzugsweise beiden Bauteilen, koppelnd in Eingriff steht.

2. Einrichtung nach Anspruch 1, **dadurch gekennzeichnet, daß**
das Spannelement (9, 9a, 9b, 9c, 9d, 9e, 9f) wenigstens eine zu dem Bauteil (3, 3a, 5, 5a, 29, 29e, 31, 31d, 33, 33d, 33f, 37, 39) offene, von dem Material des Grundkörpers (7, 7a, 7b, 7c, 7d, 7e) belegte Kammer (13, 13a, 15, 15a) begrenzt und dazu ausgelegt ist, beim Übergang vom entspannten Zustand in den gespannten Zustand das Volumen der wenigsten einen Kammer (13, 13a, 15, 15a) zu reduzieren.

3. Einrichtung nach Anspruch 1 oder 2, **dadurch gekennzeichnet, daß**
das Spannelement (9, 9a, 9b, 9c, 9d, 9e, 9f) ein plastisch verformbares Flachteil, insbesondere ein Blechteil, ist, das von dem Grundkörper (7, 7a, 7b, 7c, 7d, 7e) größtenteils bedeckt, vorzugsweise größtenteils in dem Grundkörper (7, 7a, 7b, 7c, 7d, 7e) eingebettet ist.

4. Einrichtung nach Anspruch 3, **dadurch gekennzeichnet, daß**
das Flachteil zur Bildung von wenigstens einer von dem Material des Grundkörpers (7, 7a, 7b, 7c, 7d, 7e) belegte, im wesentlichen in Richtung des Bauteils (3, 3a, 5, 5a, 29, 29e, 31, 31d, 33, 33d, 33f, 37, 39) offene Kammer (13, 13a, 15, 15a) profiliert ist.

5. Einrichtung nach Anspruch 3 oder 4, **dadurch gekennzeichnet, daß**
das Flachteil der Länge nach zumindest teilweise profiliert, wobei insbesondere das Profil mit wenigstens einer Erhebung und/oder wenigstens einer Senkung versehen ist.

6. Einrichtung nach Anspruch 4 oder 5 ,**dadurch gekennzeichnet, daß**
das Flachteil ein offenes Profil aufweist, insbesondere rohrförmig ausgebildet ist, und konzentrisch zu einem rohrförmig ausgebildeten Bauteil (29, 29e, 31, 31d, 33f, 37, 39), vorzugsweise zu zwei rohrförmig ausgebildeten Bauteilen, angeordnet ist.

7. Einrichtung nach Anspruch 6, **dadurch gekennzeichnet, daß** das Flachteil in seiner Längsrichtung geschlitzt ist.

8. Einrichtung nach einem der Ansprüche 2 bis 7, **dadurch gekennzeichnet, daß**
die Abmessung des Anpressdruckbereichs (17, 17a, 19, 19a) vorzugsweise über die Größe der Öffnung der Kammer (13, 13a, 15, 15a) einstellbar ist.

9. Einrichtung nach einem der Ansprüche 1 bis 8, **dadurch gekennzeichnet, daß**
der Anpressdruckbereich (17, 17a, 19, 19a) im wesentlichen punktförmig, linear, schmaloder breitflächig ist.

10. Elastische Gelenk mit einer ersten Armatur, einer zweiten Armatur und einer dazwischen angeordneten, nach einem der Ansprüche 1 bis 9 ausgeführten Einrichtung zum elastischen Koppeln der als erste und zweite Armatur ausgebildeten Bauteile.

11. Gelenk nach Anspruch 10, **dadurch gekennzeichnet, daß**
die Armaturen rohrförmig und zueinander konzentrisch angeordnet sind oder die erste Armatur rohrförmig und die zweite Armatur im Querschnitt rechteckig sind.

12. Anordnung zum elastischen Koppeln wenigsten zweier starrer Bestandteile (3, 3a, 5, 5a, 29, 29e, 31, 31d, 33, 33d, 33f, 37, 39) eines Schwingungssystems insbesondere eines Kraftfahrzeugs **gekennzeichnet durch** eine nach einem der Ansprüche 1 bis 9 ausgeführte Einrichtung (1, 1a, 1b, 1c, 1d, 1e, 1f), wobei der Grundkörper (7, 7a, 7b, 7c, 7d, 7e) unmittelbar mit wenigsten einem Bestandteil (3, 3a, 5, 5a, 29, 29e, 31, 31d, 33, 33d, 33f, 37, 39) des Schwingungssystems, vorzugsweise mit beiden Bestandteilen, unter Bildung wenigstens eines Anpreßbereichs (17, 17a, 19, 19a), vorzugsweise wenigstens zweier Anpreßbereiche, koppelnd in Eingriff steht.

13. Verfahren zum Herstellen eines insbesondere nach einem der Ansprüche 10 oder 11 ausgeführten elastischen Gelenks zum Koppeln wenigsten zweier Bestandteile eines Schwingungssystems insbesondere eines Kraftfahrzeugs, wobei ein mit einem elastischen und im wesentlichen inkompressiblen Grundkörper (7, 7a, 7b, 7c, 7d, 7e) funktional verbundenes Spannelement (9, 9a, 9b, 9c, 9d, 9e, 9f) aus einem entspannten Zustand, in dem beide Armaturen von dem Grundkörper (7, 7a, 7b, 7c, 7d, 7e) befreit sind, in einen gespannten Zustand gebracht wird, in dem der Grundkörper (7, 7a, 7b, 7c, 7d, 7e) im wesentlichen in Richtung (Dehnungsrichtung) der beiden Armaturen elastisch verformt oder gespannt wird, wodurch der Grundkörper (7, 7a, 7b, 7c, 7d, 7e) unter Bildung wenigstens zweier Anpreßbereiche (17, 17a, 19, 19a) mit beiden Annaturen in Eingriff gebracht wird.

14. Verfahren nach Anspruch 13, **dadurch gekennzeichnet, daß**
für das Spannelement (9, 9a, 9b, 9c, 9d, 9e, 9f) ein insbesondere profiliertes Flachteil vorgesehen wird, das in einer Richtung verformt wird, die im wesentlichen senkrecht zur dem Grundkörper (7, 7a, 7b, 7c, 7d, 7e) auferlegten Dehnungsrichtung ist.
